# EUROPÄISCHE PATENTSCHRIFT

(11) **EP 3 487 655 B1**
(45) Veröffentlichungstag und Bekanntmachung des Hinweises auf die Patenterteilung: **07.10.2020**
(21) Anmeldenummer: 17742228.4
(22) Anmeldetag: 19.07.2017
(51) Int. Cl.: B23K 20/12, B23K 37/08, B29C 65/06

(54) **FSW-WERKZEUG MIT FESTER SCHULTER**
FSW TOOL WITH FIXED SHOULDER
OUTIL FSW AVEC ÉPAULIÈRE FIXE

(30) Priorität: 19.07.2016 DE 102016113289
(43) Veröffentlichungstag der Anmeldung: 29.05.2019
(73) Patentinhaber: KUKA Deutschland GmbH, 86165 Augsburg (DE)
(72) Erfinder: FRÖHLKE, Stefan, 86199 Augsburg (DE); HABERSETZER, Stefan, 86316 Rinnenthal (DE); RICHTER, Bernd, 86343 Königsbrunn (DE)
(74) Vertreter: Tillmann, Axel
(86) Internationale Anmeldenummer: PCT/EP2017/068222
(87) Internationale Veröffentlichungsnummer: WO 2018/015429

(56) Entgegenhaltungen:
- WO-A1-2008/082420
- DE-B3-102012 010 836
- DE-B3-102014 004 331

## Beschreibung

Die vorliegende Erfindung betrifft einen Rüstsatz für ein FSW-Werkzeug, ein mit einem solchen Rüstsatz ausgestattetes FSW-Werkzeug sowie ein Verfahren zur Anpassung eines FSW-Werkzeugs für eine Schweißoperation und ein Betriebsverfahren für ein FSW-Werkzeug.

Im Rahmen der vorliegenden Offenbarung wird die Abkürzung "FSW" für Rührreibschweißen (englisch: friction stir welding) verwendet. Ein FSW-Werkzeug ist demnach ein Rührreibschweiß-Werkzeug und ein FSW-Prozess / -Verfahren ist ein Rührreibschweiß-Prozess / -Verfahren.

FSW-Verfahren sind in der Praxis in verschiedenen Ausführungen bekannt. Sie werden in der Regel dazu verwendet, zwei Bauteile bzw. Werkstücke aus gleichen oder zueinander passenden Materialien miteinander zu verbinden. Ein in Drehbewegung versetzter Schweißstift wird zu Beginn eines FSW-Prozesses an die Oberfläche zumindest eines der Bauteile angesetzt. Durch die Reibung zwischen dem Stift und der Oberfläche wird das Material des mindestens einen Bauteils solange erwärmt, bis es plastifiziert, d.h. in einen pastösen Zustand übergeht, ohne dabei aufzuschmelzen. Der Schweißstift wird in das Material des mindestens einen Werkstücks eingetaucht, wobei auch tiefer im Material liegende Schichten plastifiziert werden.

Am dorsalen Ende des Schweißstifts ist eine in Radialrichtung überstehende Fläche, die sogenannte Schweißschulter oder Schulter angeordnet, die beim Eintauchen des Schweißstifts mit dem Material des mindestens einen Werkstücks neben dem Schweißstift zur Anlage kommt. Die Schulter kann in Bezug auf den Schweißstift dieselbe oder eine unterschiedliche Rotationsgeschwindigkeit haben. In Bezug auf das mindestens eine Werkstück kann die Schulter eine Rotationsbewegung ausführen oder stillstehen.

Das FSW-Werkzeug wird mit dem in das Material eingetauchten Schweißstift und der an der Oberfläche anliegenden Schweißschulter an dem Werkstück gemäß einer gewünschten Schweißlinie oder Schweißbahn entlangbewegt. Dabei wird durch den Schweißstift immer weiteres Material des Werkstücks plastifiziert und ggf. um den Schweißstift herum gefördert. Die Schweißschulter des FSW-Werkzeugs formt während der im Wesentlichen translatorischen Schweißbewegung die Schweißnaht und dient ggf. ferner zur Auswirkung eines Anpressdrucks auf die Oberfläche des mindestens einen Werkstücks, insbesondere im Wesentlichen senkrecht zur Oberfläche oder mit einem leichten Anstellwinkel gegenüber der Normalrichtung. Durch den Anpressdruck und die Überdeckung der plastifizierten Zone mit der Schweißschulter wird erreicht, dass das pastöse Material die vollständige Tiefe der Schweißnaht ausfüllt und nicht in einer unerwünschten Richtung wegläuft.

Eine Schweißschulter ist beim Rührreibschweißen definiert als ein Oberflächenbereich neben einem Schweißstift, der während einer FSW-Schweißoperation die Oberfläche von zumindest einem Werkstück derart berührt, dass sie in Kontakt mit dem plastifizierten Material kommt. Die Schweißschulter kann relativ zu dem Werkstück eine Rotationsbewegung sowie entlang einer Schweißbahn eine Translationsbewegung ausführen. Durch die Translations- und/oder Rotationsbewegung (allgemein Relativbewegung) zwischen Schweißschulter und Werkstück kann Reibungswärme erzeugt werden, die zumindest bereichsweise die Plastifizierung unterstützt. Alternativ kann die Plastifizierung ausschließlich oder weit überwiegend durch die Einwirkung des Schweißstifts bewirkt werden.

Aus der WO 2008/082420 A1, welche als nächstliegender Stand der Technik angesehen wird und den Oberbegriff des Anspruchs 1 bildet, ist ein Rüstsatz für ein FSW-Werkzeug bekannt mit einem Adapter, der zylindrisch geformt ist.

Aus US 8,006,890 B2 und US 8, 814, 027 B2 sind FSW-Werkzeuge bekannt, bei denen ein Spalt zwischen dem rotierenden und jeweils einstückig ausgeführten Schweißstift und einem angrenzenden Bauteil, das die Schweißschulter bildet, jedenfalls an dem zur Schweißstelle weisenden Ende zylindrisch geformt ist.

DE 10 2012 206 368 A1 offenbart eine Rührreib-Punktschweißvorrichtung zum Verbinden von übereinander liegenden flachen Werkstücken mittels einer Rührreib-Punktschweißung (Friction Stir Spot Welding - FSSW). An dem FSSW-Schweißwerkzeug ist eine Druckaufbringeinrichtung mit einem Druckfuß vorgesehen. Der Druckfuß wird während eines Punktschweißvorgangs auf das obere Werkstück gepresst, um ein Abheben von dem unteren Werkstück zu verhindern. Ein einstückig ausgebildetes rotierendes Schweißwerkzeug mit einem endseitigen Schweißstift wird durch einen Tauchmechanismus in die Oberfläche des oberen Werkstücks eingetaucht. Beim Eintauchen wird der Druckfuß gegen die Kraft einer Vorspannkomponente in das Gehäuse des FSSW-Werkzeugs hineingedrückt. Während eines Schweißvorgangs weist der Druckfuß keine Relativbewegung zu den Werkstücken auf. Die Kontaktflächen des Druckfußes liegen außerhalb der Schweißzone, d.h. sie kommen nicht in Kontakt mit plastifiziertem Material. Eine Schweißschulter ist ausschließlich an dem einstückigen rotierenden Schweißwerkzeug in einem Bereich neben dem Schweißstift vorgesehen.

Die vorliegende Offenbarung ist auf FSW-Verfahren gerichtet, bei denen eine im Wesentlichen rein translatorische Bewegung der Schulter des Schweißwerkzeugs gegenüber dem mindestens einen Werkstück erfolgt. Diese werden auch als FSW-Verfahren mit stehender Schulter oder mit fester Schulter bezeichnet. Gegebenenfalls kann das hier offenbarte FSW-Werkzeug auch für solche FSW-Verfahren verwendet werden, in denen die Schweißschulter und der Schweißstift mit unterschiedlichen Rotationsgeschwindigkeiten (untereinander bzw. in Bezug auf das Werkstück) angetrieben werden.

Es hat sich bei diesen Verfahren als problematisch herausgestellt, dass pastöses Material in einen Bereich zwischen dem Schweißstift und der stehenden Schulter eindringen kann. Zwischen dem Schweißstift und der Schulter ist eine Drehbeweglichkeit erforderlich, die in der Regel mit einem Lager und einem Ringspalt einhergeht. Während des Schweißvorganges können bei bisher bekannten FSW-Werkzeugen Anteile des plastifizierten Materials in diese Lagerstelle bzw. den Ringspalt eindringen und auf verschiedene Weise zu Beeinträchtigungen des Schweißvorgangs oder Beschädigungen am FSW-Werkzeug und/oder am Werkstück führen. Insbesondere kann es zu einem Verstopfen des Spalts und/oder zu einer Blockade der Lagerstelle kommen, was einerseits Unregelmäßigkeiten oder Abbrüche im Schweißvorgang bzw. fehlerhafte Schweißnähte erzeugt und andererseits zu einer Schädigung oder vollständigen Zerstörung des FSW-Werkzeugs führen kann. Aufgrund der notwendigen Relativbewegung zwischen dem Schweißstift und der Schweißschulter kann allerdings nicht auf einen Ringspalt verzichtet werden.

Es ist Aufgabe der vorliegenden Erfindung, einen Rüstsatz für ein FSW-Werkzeug, ein mit einem solchen Rüstsatz ausgestattetes FSW-Werkzeug und ein zugehöriges Anpassungsverfahren für ein FSW-Werkzeug sowie ein Betriebsverfahren für ein FSW-Werkzeug aufzuzeigen, mit denen die vorgenannten Nachteile vermindert oder beseitigt werden können.

Die Erfindung löst diese Aufgabe mit den Merkmalen in den eigenständigen Ansprüchen.

Ein FSW-Werkzeug weist in der Regel Komponenten mit einer hohen Lebensdauer auf, die über eine Vielzahl von Schweißvorgängen oder die gesamte Lebensdauer des FSW-Werkzeugs ohne Austausch verwendet werden können. Darüber hinaus umfasst das FSW-Werkzeug Komponenten, die während dem Schweißvorgang einem hohen Verschleiß unterliegen und die somit nach einer bestimmten Anzahl von Schweißvorgängen instandgesetzt oder ausgetauscht werden müssen. Diese Komponenten werden nachfolgend als Rüstsatz bezeichnet.

Ein Rüstsatz für ein FSW-Werkzeug gemäß der vorliegenden Offenbarung umfasst einen Adapter, der in der Werkzeugaufnahme eines FSW-Werkzeugs einsetzbar ist. Der Adapter ist zur Aufnahme eines Schweißstifts ausgebildet. Der Rüstsatz umfasst weiterhin eine Schulterkappe, die zumindest einen Teil der Schweißschulter bildet. Ein Schweißstift ist ein optionaler Bestandteil des Rüstsatzes gemäß der vorliegenden Offenbarung.

Der Adapter, der Schweißstift und die Schulterkappe können jeweils einzeln oder gemeinsam nach einer bestimmten Anzahl von Schweißvorgängen instandgesetzt oder ausgetauscht werden. Die Werkzeugaufnahme wird in der Regel seltener oder gar nicht ausgetauscht. Sie kann allerdings bevorzugt zur Aufnahme und Befestigung des Adapters und/oder des Schweißstifts gemäß der vorliegenden Offenbarung und etwaig an die Form der Schulterkappe angepasst sein. Die Werkzeugaufnahme bildet ebenfalls einen optionalen Bestandteil des Rüstsatzes gemäß der vorliegenden Offenbarung.

Die Schulterkappe weist eine Durchtrittsöffnung für den Schweißstift und den Adapter auf. Sie weist ferner einen an der Außenoberfläche an die Druchtrittsöffnung angrenzenden Schweißschulter-Bereich auf. Der Schweißschulter-Bereich ist ein distaler, d.h. zur Schweißstelle weisender Oberflächenbereich der Schulterkappe, der an dem Schweißprozess körperlich beteiligt ist.

Bevorzugt weisen der Schweißstift, der Adapter und die Durchtrittsöffnung in der Schulterkappe eine gemeinsame Bezugsachse auf, die im Folgenden als "Längsachse" bezeichnet wird. Die Längsachse verläuft in der Regel konzentrisch zur Durchtrittsöffnung der Schulterkappe und ist gleichzeitig eine Rotationsachse für die Drehbewegung des Adapters und des Schweißstifts. Mit anderen Worten ist der Adapter um eine konzentrisch zur Durchtrittsöffnung verlaufende Längsachse drehbar gegenüber der Schulterkappe gelagert.

Gemäß der vorliegenden Offenbarung ist vorgesehen, die Innenkontur der Durchtrittsöffnung sowie eine radiale Außenkontur des Adapters zumindest an dem zur Schweißstelle weisenden Ende, d.h. am distalen Ende, konisch zu formen. Hierdurch wird zwischen der Schulterkappe und dem Adapter, insbesondere zwischen der vorgenannten Innenkontur und der radialen Außenkontur ein im Wesentlichen konischer Ringspalt gebildet. Bevorzugt sind die Konusform an der Innenkontur der Durchtrittsöffnung und ebenso die Konusform an der Außenseite des Adapters derart gewählt, dass sie sich zur Innenseite des FSW-Werkzeugs hin, d.h. zur dorsalen Seite hin, weiten. Die Öffnungswinkel der beiden Konen können identisch oder unterschiedlich gewählt werden, sodass sich zur Innenseite, d.h. zur dorsalen Seite, verjüngende, erweiternde oder im Querschnitt einheitliche lichte Weiten des Ringspalts bilden.

Die konische Form des Ringspalts bzw. der Innenkontur der Durchtrittsöffnung sowie der Außenkontur des Adapters führt zu verschiedenen Vorteilen. Einerseits wird bei einer Veränderung der Positionierung des Adapters in Richtung der Längsachse relativ zu dem Schweißschulterbereich die lichte Weite des Ringspalts verändert. Wenn der Adapter näher zur dorsalen Seite, d.h. zur Innenseite des FSW-Werkzeugs verschoben wird, erhöht sich die Öffnungsweite des Ringspalts. Wird hingegen der Adapter mehr zur distalen Seite, d.h. mehr in Richtung des Eingriffspunkts des FSW-Werkzeugs, verschoben, verringert sich die lichte Weite des Ringspalts. Durch die Positionierung des Adapters relativ zu der Schulterkappe ist also entsprechend dem Öffnungswinkel der konusförmigen Konturen eine gesteuerte Einstellung der lichten Weite des Ringspalts möglich. Somit kann die Weite des Ringspalts am distalen Ende (direkt an der äußeren Kontaktzone zur Schweißstelle) auf eine für die jeweilige Schweißoperation passende Größe eingestellt werden. Dies ist mit den bisher bekannten zylindrischen Spalten nicht möglich gewesen.

Besonders bevorzugt sind der Adapter und die Werkzeugaufnahme derart ausgebildet, dass eine Positionierung des Adapters in Richtung der Längsachse relativ zu dem Schweißschulterbereich stufenlos einstellbar ist, sodass in der Folge die lichte Weite des Ringspalts stufenlos einstellbar ist.

Es ist somit möglich, die Weite des Ringspalts an die jeweiligen Prozessbedingungen und beispielsweise die zu verarbeitenden Materialien und/oder Schweißgeschwindigkeiten anzupassen.

Darüber hinaus sind der Adapter und/oder der Schweißstift bevorzugt dazu ausgebildet, eine Positionierung des Schweißstifts entlang der Längsachse und damit die Eindringtiefe des Stifts in das Material des mindestens einen Werkstücks stufenlos einzustellen.

Besonders bevorzugt kann die Einstellung der Positionierung des Schweißstifts unabhängig von der Einstellung der Positionierung des Adapters erfolgen. Es ist somit möglich, geringe und hohe Eindringtiefen für den Schweißstift jeweils in Kombination mit weiten oder engen Spaltmaßen vorzugeben, sodass der Rüstsatz bzw. das FSW-Werkzeug flexibel an beliebige Schweißaufgaben anpassbar sind. Das Auffinden der idealen Kombination aus dem Maß der Eindringtiefe des Schweißstifts und der Weite des Ringspalts kann auf beliebige Weise erfolgen, beispielsweise durch Versuch, iterative Optimierung oder analytische Berechnung/Modellbildung.

In den Unteransprüchen, den beigefügten Zeichnungen sowie der nachfolgenden Beschreibung sind weitere vorteilhafte Ausbildungen der Erfindung angegeben.

Die Erfindung ist in den Zeichnungen beispielhaft und schematisch dargestellt. Es zeigen:
- Figur 1:: Ein FSW-Werkzeug gemäß der vorliegenden Offenbarung im Halbschnitt mit einer Vergrößerungsdarstellung des distalen Endbereichs;
- Figur 2:: eine Seitenansicht des FSW-Werkzeugs aus Figur 1;
- Figur 3:: einen Schweißstift in Frontansicht und Seitenansicht;
- Figur 4:: einen Adapter zur Aufnahme eines Schweißstifts;
- Figuren 5 und 6:: Vergleichsdarstellungen zur Erläuterung der Positionierung des Adapters und eines Schweißstifts in Längsrichtung und zur Anpassung des FSW-Werkzeugs für einen Schweißprozess.

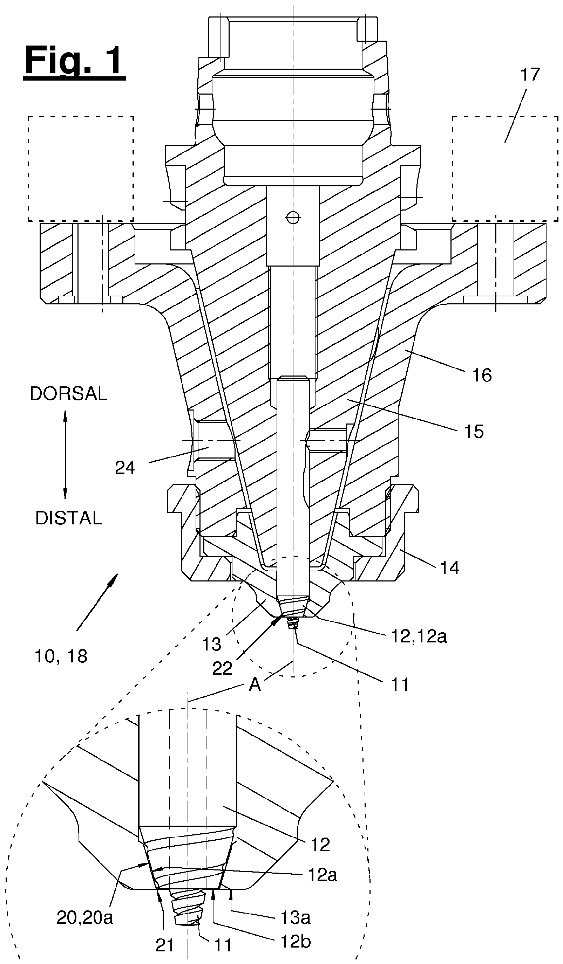

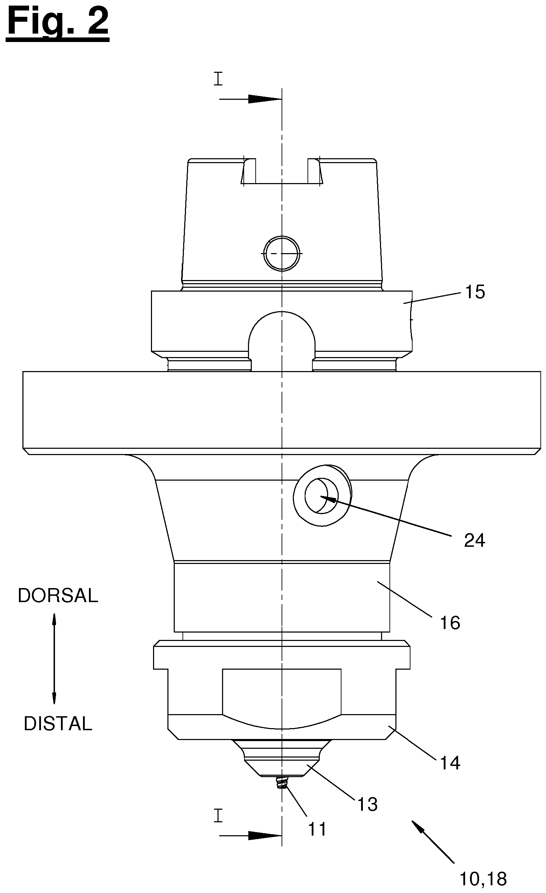

Figuren 1 und 2 zeigen ein FSW-Werkzeug (10) mit einem Rüstsatz (18) gemäß der vorliegenden Offenbarung. Die Schnittansicht in Figur 1 ist gemäß der Schnittlinie I-I in Figur 2 gewählt.

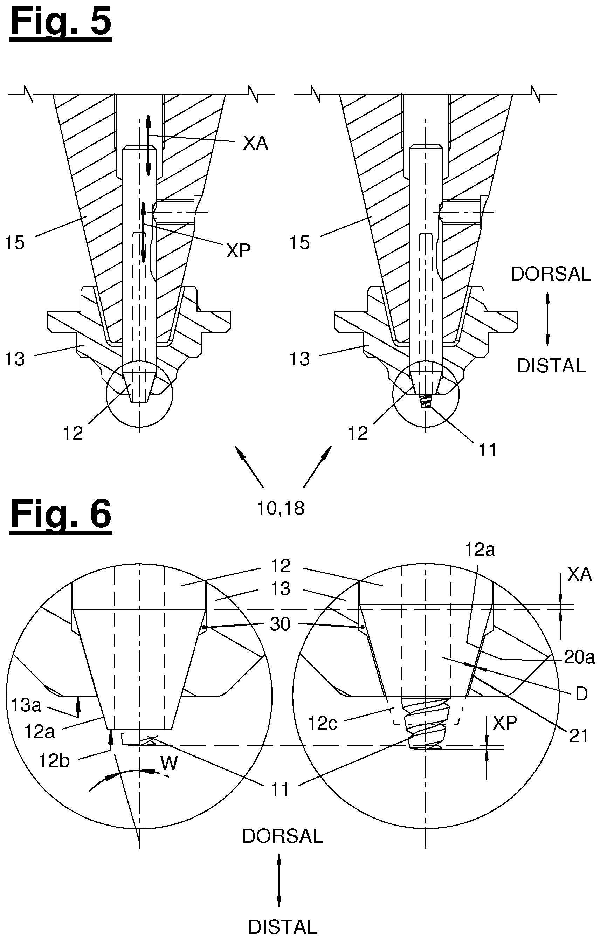

Der Rüstsatz (18) gemäß der vorliegenden Offenbarung umfasst zumindest einen Adapter (12) und eine Schulterkappe (13). Der Adapter (12) ist in eine entsprechend angepasste Werkzeugaufnahme (15) an dem FSW-Werkzeug (10) einsetzbar. In den Adapter (12) ist ein Schweißstift (11) einsetzbar. Gemäß den Darstellungen in Figuren 5 und 6 sind eine (stufenlose) Positionierung (XA) des Adapters (12) sowie eine (stufenlose) Positionierung (XP) des Schweißstifts (11) in Richtung einer Längsachse (A) vorgesehen.

In dem gezeigten Beispiel weisen der Schweißstift (11), der Adapter (12) und die Werkzeugaufnahme (15) eine gemeinsame Längsachse (A) auf, um die die vorgenannten Komponenten gemeinsam rotatorisch bewegbar sind. Der Antrieb für die Drehbewegung kann auf beliebige Weise erzeugt werden. Bevorzugt kann das FSW-Werkzeug (10) über einen eigenen Drehantrieb verfügen. Alternativ oder zusätzlich kann die Werkzeugaufnahme (15) mit einem externen Antrieb, beispielsweise einer Spindel, dauerhaft oder lösbar verbunden sein.

Das FSW-Werkzeug (10) weist einen Werkzeugträger (17) auf, der beliebig ausgebildet sein kann. An dem Werkzeugträger (17) sind bevorzugt Lagerstellen vorgesehen, um die Werkzeugaufnahme (15) um die Längsachse (A) rotatorisch drehbar und in Axialrichtung (A) abgestützt aufzunehmen. Das FSW-Werkzeug (10) weist bevorzugt weiterhin einen Dom (16) auf, der eine Außenseite der Werkzeugaufnahme (15) zumindest bereichsweise umschließt und an dem die Schulterkappe (13) drehfest und in Axialrichtung (A) abgestützt festlegbar ist. Mit anderen Worten ist das FSW-Werkzeug (17) dazu ausgebildet, den Rüstsatz (18) aufzunehmen und gegenüber einer gemeinsamen Bezugsbasis abzustützen bzw. zu lagern.

Das FSW-Werkzeug (10) ist bevorzugt als manipulatorgeführtes FSW-Werkzeug ausgebildet, das in einem automatisierten Produktionsprozess verwendet wird. Der Werkzeugträger (17) weist entsprechend bevorzugt ein Flanschelement zur Anbindung an eine Manipulatorhand und etwaig an eine Abtriebsachse des Manipulators auf. Der Manipulator kann bevorzugt ein fünf-, sechs-, oder siebenachsiger Industrieroboter sein. Die Manipulatorhand kann entsprechend eine Roboterhand sein.

Das FSW-Werkzeug mit dem Rüstsatz (18), dem Dom (16), der Werkzeugaufnahme (15) und dem Werkzeugträger (17) ist bevorzugt derart ausgebildet, dass die Werkzeugaufnahme (15) mit dem Adapter (12) relativ zu dem Dom (16) drehbar gelagert und an dem Werkzeugträger (17) in Richtung der Längsachse (A) positioniert ist, und dass die Schulterkappe (13) mit dem Werkzeugträger (17) drehfest verbunden und in Richtung der Längsachse (A) positioniert ist. Auf diese Weise können am distalen Ende des FSW-Werkzeugs einerseits die Höhenlage des Adapters (12) in Richtung der Längsachse (A) und andererseits die Höhenlage des Schweißstifts (11) in Richtung der Längsachse (A) gegenüber der Höhenlage des Schweißschulter-Bereichs (13a) an der Schulterkappe (13) auf ein gewünschtes Maß eingestellt werden.

Alternativ oder zusätzlich kann die Höhenlage der Schulterkappe (13) in der Längsrichtung (A) gegenüber dem Werkzeugträger (17) und/oder dem Dom (16) einstellbar sein, beispielsweise durch das Einlegen von Passscheiben oder anderen gebräuchlichen Konstruktionsvarianten.

In den gezeigten Beispielen ist die Schulterkappe (13) ein im Wesentlichen rotationssymmetrisches Bauteil, das am distalen Ende des Doms (16) in eine entsprechend angepasste Aufnahme einsetzbar ist. Ggf. kann eine Verdrehsicherung an der Schulterkappe (13) und/oder dem Dom (16) vorgesehen sein, über die Reaktionskräfte aus dem Schweißprozess gegenüber dem Dom (16) abstützbar sind.

In dem gezeigten Beispiel wird die Schulterkappe (13) durch eine Überwurfmutter (14) an dem Dom (16) festgelegt. Die Überwurfmutter oder ein anderes geeignetes Befestigungsmittel für die Schulterkappe (13) kann ebenfalls eine Drehsicherung aufweisen.

Gemäß einer alternativen Ausführungsvariante (nicht gezeigt) können die Schulterkappe (13) und die Überwurfmutter (14) einstückig verbunden sein. Mit anderen Worten kann die Schulterkappe (13) direkt über ein Gewinde oder ein anderes, geeignetes Konstruktionsmittel an dem Dom (16) festgelegt sein.

Eine getrennte Ausführung von Schulterkappe (13) und Überwurfmutter (14) hat jedoch verschiedene Vorteile. Die Schulterkappe (13) wird verschleißbedingt regelmäßig instandgesetzt oder ausgetauscht. Durch die funktionale Trennung von Schulterkappe (13) und Überwurfmutter (14) wird eine einfachere und damit billigere Konstruktion der Schulterkappe (13) ermöglicht. Ferner können die Materialien der Schulterkappe (13) und insbesondere des Schweißschulterbereichs (13a) einerseits und der Überwurfmutter (14) andererseits, insbesondere der Befestigungsmittel (hier Gewinde), unabhängig voneinander festgelegt werden. Es ist somit möglich, Schulterkappen (13) aus verschiedenen Materialien für unterschiedliche Schweiß-Anforderungen bereitzustellen, die jeweils mit derselben oder nur wenigen Varianten einer Überwurfmutter (14) an dem FSW-Werkzeug (10) befestigbar sind.

Im unteren Bereich von Figur 1 ist eine vergrößerte Darstellung des distalen Endes des FSW-Werkzeugs (10) gezeigt. Während eines Schweißvorgangs werden bevorzugt der Schweißstift (11) und der Adapter (12) in eine gemeinsame Drehbewegung versetzt, insbesondere durch Antreiben der Werkzeugaufnahme (15). Ferner wird die Schulterkappe (13) mit dem Schweißschulter-Bereich (13a) während des Schweißvorgangs in Bezug auf das Werkstück nicht rotatorisch, sondern nur (zusammen mit dem FSW-Werkzeug) im Wesentlichen entlang der vorgesehenen Schweißbahn bewegt, was in der Regel eine rein translatorische Relativbewegung zwischen der Schweißschulter und dem Werkstück erzeugt. In der vergrößerten Darstellung gemäß Figur 1 bewegen sich also der Schweißstift (11) und die distale Stirnfläche (12b) mit einer ersten Drehgeschwindigkeit und der Schweißschulter-Bereich (13a) mit einer zweiten Drehgeschwindigkeit, die bevorzugt in Bezug auf das Werkstück null ist. Drehungen des gesamten FSW-Werkzeugs (10), die sich beispielsweise aus der Führungsbewegung bzw. der Schweißbahn ergeben, können auch bei der bevorzugten Ausführungsvariante mit stehender Schulter zu einer geringfügigen Rotation des Schweißschulter-Bereichs (13a) gegenüber dem mindestens einen Werkstück führen, was nicht als relevante Drehung zu berücksichtigen ist. Zwischen der distalen Stirnfläche (12b) und dem Schweißschulter-Bereich (13a) ist ein Spalt, insbesondere ein Ringspalt (21) angeordnet, um die Relativdrehung zwischen dem Schweißstift (11) und dem Adapter (12) einerseits sowie der Schulterkappe (13) andererseits zu ermöglichen. Der Ringspalt ist in Radialrichtung nach außen hin durch eine Innenkontur (20a) der Durchtrittsöffnung (20) an der Schulterkappe (13) begrenzt. In der Radialrichtung nach innen hin ist der Ringspalt (21) durch eine radiale Außenkontur (12a) des Adapters (12) begrenzt. Der Ringspalt (21) ist bevorzugt rotationssymmetrisch zur Längsachse (A) ausgebildet.

Die Innenkontur (20a) der Durchtrittsöffnung (20) und die radiale Außenkontur (12a) des Adapters (12) sind zumindest am distalen Ende konisch geformt. Bevorzugt erstreckt sich die Konusform über die Gesamtlänge der Überdeckung zwischen der Innenkontur (20a) und der Außenkontur (12a).

Der mittlere Durchmesser des Ringspalts (21) erhöht sich bevorzugt in dorsaler Richtung entlang der Längsachse (A). Mit anderen Worten ist der mittlere Durchmesser des Ringspalts (21) am distalen Ende geringer als am dorsalen Ende. Die lichte Weite (D) (vergleiche Figur 6) ist also über die gesamte Länge des Ringspalts (21) gleich oder erhöht sich in dorsaler Richtung. Gemäß einer alternativen Variante kann sich der mittlere Durchmesser des Ringspalts (21) in dorsaler Richtung entlang der Längsachse (A) verkleinern.

Gemäß einer bevorzugten Ausführungsvariante (vgl. Figur 6) hat der Öffnungswinkel (W) der konischen Innenkontur (20a) einen Betrag zwischen 10° und 45° (Winkelgrad). Ferner hat bevorzugt auch der Öffnungswinkel (W) der konischen radialen Außenkontur (12a) des Adapters (12) gegenüber der Längsachse (A) einen Betrag zwischen 10° und 45° (Winkelgrad). Mit anderen Worten haben bevorzugt der Öffnungswinkel (W) der konischen Kontur (20a) und der konischen radialen Außenkontur (12a) dasselbe Maß. Alternativ können die Öffnungswinkel leicht unterschiedlich sein. Es kann insbesondere vorgesehen sein, dass der Öffnungswinkel der Innenkontur (20a) etwas größer gewählt ist als der Öffnungswinkel der konischen radialen Außenkontur (12a), sodass die lichte Weite (D) des Ringspalts (21) in dorsaler Richtung entlang der Längsachse (A) ansteigt.

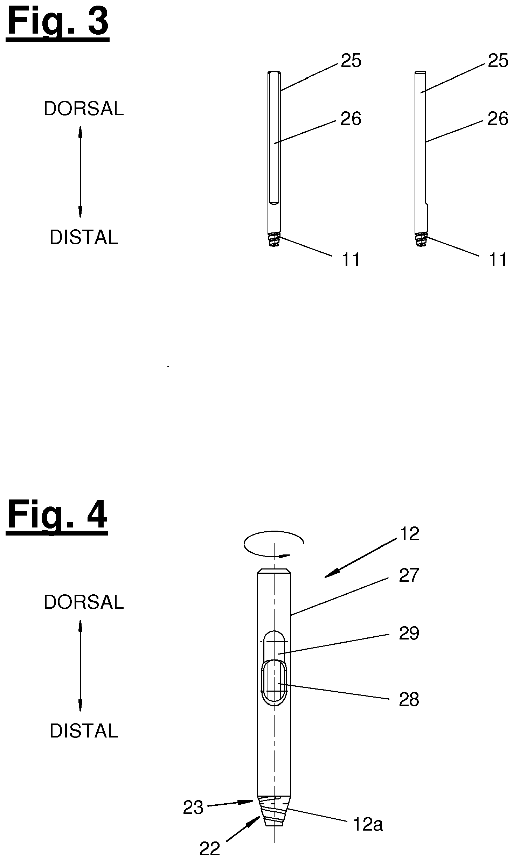

Eine Positionierung (XA) des Adapters (12) und/oder des Schweißstifts (11) entlang der Längsachse (A) relativ zur Schulterkappe (13) führt zu einer Vergrößerung oder Verkleinerung der lichten Weite (D) des Ringspalts. Die Positionierung (XA) kann durch beliebige Mittel und Konstruktionselemente erfolgen. Bevorzugt sind an der Werkzeugaufnahme (15) ein oder mehrere Einstellungsmittel zur Festlegung der axialen Position des Adapters (12) und/oder des Schweißstifts (11) angeordnet. Diese Einstellmittel können insbesondere als verstellbare Anschläge und/oder als Klemmvorrichtungen ausgebildet sein. Gemäß den Beispielen in Figuren 3 und 4 sind die Einstellungsmittel als eine oder mehrere Klemmschrauben (nicht gezeigt) ausgebildet, die in Radialrichtung in die Werkzeugaufnahme (15) einsetzbar sind.

Figuren 3 und 4 zeigen bevorzugte Ausführungsformen eines Schweißstifts (11) und eines Adapters (12). Der Schweißstift (11) und der Adapter (12) können jeweils einen Schaft (25, 27) aufweisen, der bevorzugt rotationssymmetrisch/zylindrisch geformt ist. An diesem Schaft (25, 27) können eine oder mehrere Abflachungen (26, 29) vorgesehen sein, die mit den oben erwähnten Einstellungsmitteln zusammenwirken, insbesondere zur Herstellung einer Klemmverbindung. An der Werkzeugaufnahme (15) können die vorerwähnten ein oder mehreren Klemmschrauben oder andere geeignete Feststellmittel angeordnet sein, die mit den Abflachungen (26, 29) zusammenwirken. In dem Beispiel von Figur 4 weist der Adapter (12) eine seitliche Öffnung (28) auf, durch die eine Klemmschraube oder ein anderes, geeignetes Einstellmittel hindurchgreifen kann, um in Anlage mit der Abflachung (16) an dem Schweißstift (11) zu gelangen.

Gemäß einer anderen Ausbildungsvariante (nicht gezeigt) können an der Werkzeugaufnahme (15) und/oder dem Adapter (12) verschiebliche Anschläge oder in Richtung der Längsachse (A) angeordnete Stellschrauben vorgesehen sein, um die Positionierung (XA) des Adapters (12) und/oder die Positionierung (XP) des Schweißstifts (11) entlang der Längsachse (A) festzulegen.

Die konische radiale Außenkontur (12a) des Adapters (12) und die konische Innenkontur (20a) der Schulterkappe (13) können gemäß einer ersten Ausführungsvariante im Wesentlichen glatt ausgebildet sein, d.h. eine regelmäßige Kegelmantelfläche bilden (vgl. Figuren 5 und 6) .

Gemäß einer bevorzugten und in Figuren 1 und 4 dargestellten Ausbildungsvariante kann an der konischen radialen Außenkontur (12a) des Adapters (12) eine (erste) Leitstruktur (22) angeordnet sein, die bei einer Relativdrehung zwischen dem Adapter (12) und der Schulterkappe (13) auf ein in dem Ringspalt (21) befindliches Material eine Förderkraft in Richtung der Längsachse (A) bewirkt.

Alternativ oder zusätzlich zur der Ausbildung einer (ersten) Leitstruktur (22) an der radialen konischen Außenfläche (12a) des Adapters (12) kann eine entsprechende (erste) Leitstruktur an der Innenkontur (20a) der Durchtrittsöffnung (20) angeordnet sein (nicht dargestellt).

Die (erste) Leitstruktur (22) kann gemäß einer ersten Ausführungsvariante derart ausgebildet sein, dass sie eine Förderkraft in Richtung der Außenseite des FSW-Werkzeugs, d.h. in distaler Richtung, bewirkt. In einem solchen Fall wird durch die Leitstruktur (22) während eines Schweißvorgangs ein Austreiben von Material bewirkt, das etwaig in den Ringspalt (21) eindringt. Mit anderen Worten wird eine Selbstreinigungsfunktion für den Ringspalt (21) geschaffen, bei der Material aus dem Spalt wieder in Richtung der Schweißstelle gefördert wird. In Figur 4 ist eine vorgesehene Drehrichtung für die Drehung des Adapters (12) gegenüber der Schulterkappe (13) zur Bewirkung einer Förderkraft in distaler Richtung durch einen Rotationspfeil gekennzeichnet.

Gemäß einer zweiten Ausführungsvariante kann die (erste) Leitstruktur (22) dazu ausgebildet sein, eine Förderkraft in Richtung der Innenseite des FSW-Werkzeugs zu bewirken, d.h. in dorsaler Richtung. Auch hier wird eine Selbstreinigung des Ringspalts (21) bewirkt, wobei allerdings das Material zur Innenseite abgefördert wird. Es ist dementsprechend vorteilhaft, wenn im montierten Zustand des Rüstsatzes am inneren Ende des Ringspaltes (21) eine Kammer (30) angeordnet ist (vgl. Fig. 6), die zur Aufnahme von durch den Ringspalt (21) hindurchtretendem Schweißmaterial ausgebildet ist.

Welche der vorgenannten Ausbildungsvarianten zu bevorzugen ist, kann von dem jeweiligen Schweißprozess, insbesondere von dem Material der zu schweißenden Werkstücke abhängen.

In Figur 4 ist eine Ausführungsvariante dargestellt, bei der an der konischen radialen Außenkontur (12a) des Adapters (12) die vorgenannte erste Leitstruktur (22) und zusätzlich eine zweite (innere / dorsale) Leitstruktur (23) angeordnet sind. Die zweite Leitstruktur (23) befindet sich in der Längsrichtung (A) näher zur Innenseite des FSW-Werkzeugs, d.h. am dorsalen Ende der konischen radialen Außenkontur (12a). Die erste und die zweite Leitstruktur (22, 23) sind zueinander entgegengesetzt ausgerichtet. Besonders bevorzugt kann die erste Leitstruktur (22) eine Förderkraft in distaler Richtung, d.h. zur Außenseite des FSW-Werkzeugs hin bewirken, während die zweite Leitkontur (23) eine Förderkraft in dorsaler Richtung, d.h. zur Innenseite des FSW-Werkzeugs bewirkt.

Die erste Leitstruktur dient also dazu, einem Eindringen von pastösem Material in den Ringspalt (21) entgegenzuwirken bzw. eingetretenes Material wieder zur Schweißstelle hin zu fördern. Wenn jedoch eine zu große Menge an Material unter Überwindung der ersten Förderkraft in den Ringspalt eintritt, wird durch die zweite Leitstruktur eine Entleerung zur Innenseite hin bewirkt, insbesondere in Richtung der vorgenannten Kammer (30). Durch das Größenverhältnis zwischen der ersten und der zweiten Leitkontur (22, 23) und deren Ausprägung können die Förderwirkungen in distaler und dorsaler Richtung entsprechend den Prozessanforderungen angepasst werden.

Die vorgenannten Leitstrukturen (22, 23) können eine beliebige Ausbildung haben. In den Figuren ist beispielhaft eine schneckenförmige oder gewindeförmige Ausnehmung in der konischen radialen Außenkontur (12a) zur Bildung einer Leitstruktur (22, 23) dargestellt. Alternativ können eine andere Formgebung einer in die Oberfläche eingebetteten oder aufgesetzten Wendel, aufgesetzte Schaufelflächen oder sonstige geeignete Konturen genutzt sein.

Eine Reinigungswirkung für den Ringspalt (21) kann alternativ oder zusätzlich durch andere Maßnahmen erreicht werden. Insbesondere kann eine Druckdifferenz zwischen der inneren bzw. dorsalen Öffnung und der äußeren bzw. distalen Öffnung des Ringspalts (21) erzeugt werden, die je nach Bedarf eine Förderwirkung in distaler oder dorsaler Richtung auf ein in dem Ringspalt (21) befindliches Material erzeugt. Hierzu kann das FSW-Werkzeug in Bezug auf den Ringspalt (21) druckdicht ausgeführt sein und eine Druckquelle aufweisen. Die Druckquelle kann bevorzugt steuerbar oder regelbar sein.

Gemäß einer bevorzugten Ausführungsvariante umhüllt die Schulterkappe (13) den distalen Endbereich der Werkzeugaufnahme (15) druckdicht. Weiterhin können die Schulterkappe (13) und der Dom (16) gemeinsam die Werkzeugaufnahme (15) druckdicht umhüllen. Auf diese Weise wird in dem Raum zwischen der Schulterkappe (13) und dem Dom (16) einerseits und der Werkzeugaufnahme (15) und dem Adapter (12) andererseits eine Fluidpassage oder Druckleitungspassage gebildet, die mit Druck beaufschlagt werden kann. Das FSW-Werkzeug (10) kann bevorzugt am dorsalen Ende eine Druckquelle, insbesondere eine Überdruckquelle aufweisen. Bei Erzeugung eines Drucks, insbesondere eines Überdrucks in der Fluid-Passage wird auf ein in dem Ringspalt (21) befindliches Material eine nach außen (nach distal) gerichtete Förderkraft ausgewirkt. Die Überdruckquelle kann bevorzugt gesteuert oder geregelt sein, um ein Gleichgewicht zwischen den Reaktionskräften aus dem Schweißvorgang, durch die ein Material in den Ringspalt (21) befördert wird, einerseits und den in distaler Richtung zur Reinigung des Förderspalts dienenden Förderkräften andererseits herzustellen. Die Druckquelle kann alternativ oder zusätzlich dazu ausgebildet sein, einen Unterdruck zu erzeugen. Analog kann auf das etwaig im Ringspalt befindliche Material eine Förderkraft ausgewirkt werden, die das Material nach innen zieht, also in dorsaler Richtung zur Reinigung wirkt.

Die Erzeugung eines Überdrucks kann bevorzugt während einer Schweißoperation genutzt werden, um das Eindringen von pastösem Material in den Ringspalt zu vermindern oder zu vermeiden. Die Erzeugung eines Unterdrucks kann bevorzugt nach einer Schweißoperation genutzt werden, um etwaig im Ringspalt vorhandenes Material nach innen abzusaugen. Ggfs. können alternierend Überdruck und Unterdruck erzeugt werden, um eine in der Richtung wechselnde Förderkraft (nach innen / nach außen) zu erzeugen. Eine wechselnde Förderkraft kann hilfreich sein, um sich bereits verhärtende Materialbestandteile zu lösen.

Ein Betriebsverfahren für ein FSW-Werkzeug mit einer Druckquelle zur Durchführung einer Schweißoperation umfasst bevorzugt folgende Schritte:
Zustellen des FSW-Werkzeugs (10) an zumindest ein Werkstück, sodass der Schweißstift (11) in Kontakt mit einer Werkstückoberfläche tritt. Ausführen einer Eintauchbewegung entlang der Längsachse (A) des Schweißtstifts (11), bis die Hilfsschulter (12b) am Adapter (12) und/oder der Schweißschulter-Bereich (13a) der Schulterkappe (13) in Kontakt mit der Werkstückoberfläche tritt bzw. treten. Während und nach der Eintauchbewegung wird ein Teil des Materials des mindestens einen Werkstücks plastifiziert. Die Plastifizierung kann durch den Kontakt zwischen Schweißschulter-Bereich (13a) und Werkstück und/oder zwischen Hilfsschulter (12b) und Werkstück unterstützt sein.

Während (mindestens) einer Schweißoperation und/oder nach einer Schweißoperation wird die Druckquelle des FSW-Werkzeugs (10) betätigt, um innerhalb des FSW-Werkzeugs (10) einen Druck zu erzeugen und eine Förderkraft auf ein plastifiziertes Material auszuwirken, das sich etwaig im Ringspalt (21) befindet. Die Förderkraft kann nach innen (dorsal) gerichtet oder nach außen (distal) gerichtet sein. Alternativ kann die Richtung der Förderkraft wechselnd sein.Während einer Schweißoperation wird das FSW-Werkzeug (10) bevorzugt mit einer im Wesentlichen translatorischen Bewegung entlang einer vorgesehenen Schweißbahn geführt. Dabei wird bevorzugt das plastifizierte Material durch die Hilfsschulter (12b) und/oder den Schweißschulter-Bereich (13a) geformt, insbesondere zur Bildung einer erwünschten Nahtform oder Nahtoberfläche.

Der Dom (16) kann eine oder mehrere quer zur Längsachse (A) angeordnete Öffnungen (24) aufweisen, durch die die ein oder mehreren Einstellungsmittel zur Festlegung der axialen Position (XA, XP) des Adapters (12) und/oder des Schweißstifts (12) zugänglich sind. Bei einer druckdichten Ausführung des Doms (16) können entsprechende Verschlusskappen für diese Öffnungen (24) vorgesehen sein.

Nachfolgend wird unter Bezugnahme auf Figuren 5 und 6 ein bevorzugtes Verfahren zur Anpassung des FSW-Werkzeugs (10) bzw. eines Rüstsatzes (18) für eine Schweißoperation bzw. ein Schweißverfahren erläutert.

Der Adapter (12) kann gemäß den Figuren 5 und 6 in der links dargestellten Ausbildung eine distale Überlänge aufweisen, sodass er im Grundzustand über die Höhenlage des Schweißschulter-Bereichs (13a) in distaler Richtung entlang der Längsache (A) hinausragt. Wenn der Adapter (12) entlang der Längsachse (A) maximal in distaler Richtung verschoben wird, bis die konische radiale Außenkontur (12a) zur Anlage an der Innenkontur (20a) der Durchtrittsöffnung (20) gelangt, kann also die Stirnfläche (12b) des Adapters (12) in distaler Richtung über den Schweißschulter-Bereich (13a) der Schulterkappe (13) hinausragen. In dieser Position ist die lichte Weite (D) des Ringspalts (21) auf ein Minimum reduziert, insbesondere gleich null. Die Position (XA) des Adapters (12) kann in der Längsrichtung (A) relativ zu der Position der Schulterkappe (13) bzw. relativ zu dieser Ausganglage derart festgelegt werden, dass die Weite (D) des Ringspalts (21) auf ein gewünschtes Maß festgelegt wird, insbesondere indem der Adapter (12) gegenüber der vorgenannten Ausgangslage in dorsaler Richtung entlang der Längsachse (A) verschoben wird.

In Figur 6 ist aus dem Übergang von der linken Darstellung zur rechten Darstellung ersichtlich, dass gemäß dem Öffnungswinkel (W) der konischen radialen Außenkontur (12a) und/oder der Innenkontur (20a) sowie der Versatzweite (XA) des Adapters (12) die erzeugte Weite (D) des Ringspalts (21) festgelegt wird.

Sobald die gewünschte Weite (D) des Ringspalts (21) erreicht ist, kann der Adapter (12) durch die Einstellungsmittel relativ zur Schulterkappe (13) in der Längsrichtung (A) festgelegt, insbesondere geklemmt und/oder an einem Anschlag abgestützt werden. Anschließend kann der Überstand des Adapters (12) am distalen Ende gekürzt werden.

In der rechten Darstellung von Figur 6 ist beispielhaft eine Kürzung (12c) des Adapters (12) um ein solches Maß dargestellt, dass die Höhenlage der Stirnfläche (12b) des Adapters (12) in Richtung der Längsachse (A) an die Höhenlage des Schweißschulter-Bereichs (13a) angepasst wird. Mit anderen Worten erfolgt eine Kürzung des Adapters (12), um einen Höhenunterschied zwischen der Stirnfläche (12b) und dem Schweißschulter-Bereich (13a) auf ein gewünschtes Maß einzustellen. Alternativ oder zusätzlich kann eine Kürzung der Schulterkappe (13) zumindest im Bereich des Schweißschulter-Bereichs (13a) erfolgen, um einen Höhenunterschied zwischen der Stirnfläche (12b) und dem Schweißschulter-Bereich (13a) auf ein gewünschtes Maß einzustellen. Entsprechend kann ein Adapter (12) ohne den vorerwähnten Überstand vorgesehen sein.

Es ist weiterhin möglich, die Stirnfläche (12b) des Adapters (12) separat oder zusammen mit dem Schweißschulter-Bereich (13a) in Richtung der Längsachse (A) zu kürzen (nicht dargestellt). Die Kürzung kann insbesondere derart erfolgen, dass eine einheitliche Höhe des Schweißschulter-Bereichs (13a) und der Stirnfläche (12b) des Adapters (12) in Richtung der Längsachse (A) erzeugt wird. Alternativ oder zusätzlich kann eine Kürzung derart erfolgen, dass die Flächenmaße des Schweißschulter-Bereichs (13a) und/oder der Stirnfläche (12b) auf ein gewünschtes Maß oder ein gewünschtes Flächenverhältnis eingestellt werden.

Die Kürzung des Adapters (12) und/oder der Schulterkappe (13) kann auf beliebige Weise erreicht werden, insbesondere durch ein spanabhebendes Bearbeitungsverfahren wie Fräsen, Drehen oder Schleifen. Ggf. kann in den Ringspalt (21) für den Zeitraum der Kürzung ein Füllmaterial eingebracht werden, um ein Eindringen von Spänen oder anderen unerwünschten Fremdpartikeln in den Ringspalt (21) während der Kürzung zu verhindern.

Abwandlungen der Erfindung sind in verschiedener Weise möglich. Die Schulterkappe (13) kann eine oder mehrere Öffnungen oder Ausnehmungen aufweisen, durch die beispielsweise zur Innenseite des FSW-Werkzeugs (10) gefördertes Material wieder nach außen hin austreten kann. Die Schulterkappe (13) kann insbesondere bügelförmig oder lochscheibenförmig sein. Der Schweißstift (11) kann eine beliebige Ausbildung haben. Er kann insbesondere ein genormtes Standardwerkzeug sein.

Ein Rüstsatz (18) für ein FSW-Werkzeug (10) kann zusätzlich zu der Schulterkappe (13) und dem Adapter (12) einen oder mehrere Schweißstife (11) sowie ggf. eine oder mehrere Werkzeugaufnahmen (15) sowie Einstellungsmittel zur Festlegung der Position des Adapters (12) und/oder des Schweißstifts (11) umfassen. Der Dom (16) kann mit dem Werkzeugträger (17) einstückig verbunden sein.

Die distale Stirnfläche (12a) des Adapters (12) kann als Hilfsschulter dienen. Sie wird in der Regel mit derselben Rotationsgeschwindigkeit bewegt, wie der Schweißstift (11). Die Größe (Fläche) der Hilfsschulter kann durch das Kürzen des Adapters (12) bzw. dessen Überstand auf ein gewünschtes Maß eingestellt werden und zwar unabhängig von der Einstellung der Weite (D) des Ringspalts (21) und der Eindringtiefe des Schweißstifts (11).

### BEZUGSZEICHENLISTE

- 10: FSW-Werkzeug
- 11: Pin / Schweißstift - rotierend
- 12: Adapter - rotierend
- 12a: Konische radiale Außenkontur
- 12b: Stirnfläche / Hilfsschulter
- 12c: Kürzung
- 13: Schulterkappe - stehend
- 13a: Schweißschulter-Bereich
- 14: Befestigungsmittel / Mutter
- 15: Werkzeugaufnahme
- 16: Dom / Glocke
- 17: Werkzeugträger
- 18: Rüstsatz
- 20: Durchtrittsöffnung
- 20a: Innenkontur
- 21: Spalt / Ringspalt
- 22: Erste (äußere) Leitstruktur
- 23: Zweite (innere) Leitstruktur
- 24: Öffnung
- 25: Schaft
- 26: Abflachung
- 27: Schaft
- 28: Öffnung
- 29: Abflachung
- 30: Kammer
- A: Längsachse
- D: Spaltweite
- W: Öffnungswinkel / Konuswinkel
- XA: Position des Adapters
- XP: Position des Schweißstifts

## Patentansprüche

1. Rüstsatz für ein FSW-Werkzeug (10) umfassend einen in einer Werkzeugaufnahme (15) einsetzbaren Adapter (12), der zur Aufnahme eines Schweißstifts (11) ausgebildet ist, und eine Schulterkappe (13) mit einer Durchtrittsöffnung (20) für den Schweißstift (11) und den Adapter (12), wobei die Schulterkappe (13) einen an der Außenoberfläche an die Durchtrittsöffnung (20) angrenzenden Schweißschulter-Bereich (21) aufweist, und wobei der Adapter (12) um eine konzentrisch zur Durchtrittsöffnung (20) verlaufende Längsachse (A) gegenüber der Schulterkappe drehbar ist, **dadurch gekennzeichnet, dass** die Innenkontur (20a) der Durchtrittsöffnung (20) sowie eine radiale Außenkontur (12a) des Adapters (12) zumindest an dem zur Schweißstelle weisenden Ende konisch geformt sind.

2. Rüstsatz nach Anspruch 1, wobei der Adapter (12) und die Werkzeugaufnahme (15) derart ausgebildet sind, dass eine Positionierung des Adapters in Richtung der Längsachse (A) relativ zu dem Schweißschulter-Bereich (13a) stufenlos einstellbar ist.

3. Rüstsatz nach Anspruch 1 oder 2, wobei der Adapter (12) derart ausgebildet ist, dass eine Positionierung des Schweißstifts (11) entlang der Längsachse (A) stufenlos einstellbar ist.

4. Rüstsatz nach einem der vorhergehenden Ansprüche, wobei zwischen der Schulterkappe (13) und dem Adapter (12) zumindest im Bereich der Durchtrittsöffnung (21) ein Ringspalt (21) gebildet ist, wobei an der konischen radialen Außenkontur (12a) des Adapters (12) und/oder an der Innenkontur (20a) der Durchtrittsöffnung (20) eine (erste) Leitstruktur (22) angeordnet ist, die bei einer Relativdrehung zwischen dem Adapter (12) und der Schulterkappe (13) auf ein in dem Ringspalt (21) befindliches Material eine Förderkraft in Richtung der Längsachse (A) bewirkt.

5. Rüstsatz nach Anspruch 4, wobei an der konischen radialen Außenkontur (12a) des Adapters (12) und/oder an der Innenkontur (20a) der Durchtrittsöffnung (20) zusätzlich eine zweite (innere) Leitstruktur (23) angeordnet ist, die sich in der Längsrichtung (A) näher zur Innenseite des FSW-Werkzeugs : befindet, und wobei die erste (äußere) Leitstruktur (22) eine Förderkraft in Richtung der Außenseite des FSW-Werkzeugs bewirkt und die zweite (innere) Leitstruktur (23) eine Förderkraft in Richtung der Innenseite des FSW-Werkzeugs bewirkt.

6. Rüstsatz nach einem der vorhergehenden Ansprüche, wobei im montierten Zustand des Rüstsatzes am inneren Ende des Ringspaltes (21) eine Kammer (30) angeordnet ist, die zur Aufnahme von durch den Ringspalt (21) hindurchtretendem Schweißmaterial dient.

7. Rüstsatz nach einem der vorhergehenden Ansprüche, wobei an der Werkzeugaufnahme (15) und/oder am Adapter (12) ein oder mehrere Einstellungsmittel zur Festlegung der axialen Position (XA, XP) des Adapters (12) und/oder des Schweißstifts (11) angeordnet sind, insbesondere in Form von verstellbaren Anschlägen, Klemmvorrichtungen oder Klemmschrauben.

8. FSW-Werkzeug umfassend einen Rüstsatz (18) nach Anspruch 1, einen Dom (16), der die Werkzeugaufnahme (15) umgreift, und einen Werkzeugträger (17), an dem die Werkzeugaufnahme (15) und/oder der Dom (16) gestützt sind, **dadurch gekennzeichnet, dass** die Werkzeugaufnahme (15) relativ zu dem Dom (16) drehbar gelagert und an dem Werkzeugträger (17) in Richtung der Längsachse (A) abgestützt ist, und dass die Schulterkappe (13) mit dem Werkzeugträger (17) drehfest verbunden und in Richtung der Längsachse (A) abgestützt ist.

9. FSW-Werkzeug nach dem vorhergehenden Anspruch, wobei die Werkzeugaufnahme (17) dazu ausgebildet ist, an einem Manipulator befestigt zu werden, insbesondere an einem mehrachsigen Industrieroboter.

10. FSW-Werkzeug nach einem der vorhergehenden Ansprüche, wobei die Schulterkappe (13) durch ein separates Befestigungsmittel mit dem Dom (16) verbunden ist, insbesondere durch eine Überwurfmutter (14), und wobei der Dom (16) eine oder mehrere quer zur Längsachse (A) angeordnete Öffnungen (24) aufweist, durch die ein oder mehrere Einstellungsmittel zur Festlegung der axialen Position des Adapters (12) und/oder des Schweißstifts (11) zugänglich sind.

11. FSW-Werkzeug nach einem der vorhergehenden Ansprüche, wobei die Schulterkappe (13) und der Dom (16) die Werkzeugaufnahme (15) druckdicht umhüllen, und wobei das FSW-Werkzeug (10) eine Druckquelle aufweist, sodass bei Erzeugung eines Drucks innerhalb des FSW-Werkzeugs (10) auf ein in dem Ringspalt (21) befindliches Material eine nach außen oder innen gerichtete Förderkraft ausgewirkt wird.

12. Verfahren zur Anpassung eines Rüstsatzes (18) oder eines FSW-Werkzeugs (10) nach einem der vorhergehenden Ansprüche für eine Schweißoperation, **gekennzeichnet durch** den folgenden Schritt:
- Festlegen der Position (XA) des Adapters (12) in der Längsrichtung (A) relativ zu der Position der Schulterkappe (13) derart, dass die Weite (D) des Ringspalts (21) auf ein gewünschtes Maß festgelegt ist.

13. Verfahren nach dem vorhergehenden Anspruch, weiterhin umfassend die Schritte:
- Kürzen (12c) zumindest des Adapters (12) im Bereich der Stirnfläche (12b) oder zumindest der Schulterkappe (13) im Bereich des Schweißschulter-Bereichs (13a), um einen Höhenunterschied zwischen der Stirnfläche (12b) und dem Schweißschulter-Bereich (13a) auf ein gewünschtes Maß einzustellen, insbesondere zur Verringerung oder Aufhebung eines solchen Höhenunterschieds.

14. Verfahren nach einem der vorhergehenden Ansprüche, wobei die Stirnfläche des Adapters (12) zusammen mit einem Schweißschulter-Bereich (13a) in Richtung der Längsachse (A) gekürzt werden,
- sodass eine einheitliche Höhe des Schweißschulter-Bereichs (13a) und der Stirnfläche (12b) des Adapters (12) in Richtung der Längsachse (A) erzeugt wird, und/oder
- sodass die Flächenmaße des Schweißschulter-Bereichs (13a) und/oder der Stirnfläche (12b) auf ein gewünschtes Maß eingestellt werden.

15. Betriebsverfahren für ein FSW-Werkzeug nach Anspruch 11, zur Durchführung mindestens einer Schweißoperation umfassend die folgenden Schritte:
- Zustellen des FSW-Werkzeugs (10) an zumindest ein Werkstück, sodass der Schweißstift (11) in Kontakt mit einer Werkstückoberfläche tritt;
- Ausführen einer Eintauchbewegung entlang der Längsachse (A) des Schweißstifts (11), bis eine Hilfsschulter (12b) an dem Adapter (12) und/oder ein Schweißschulter-Bereich (13a) der Schulterkappe (13) in Kontakt mit der Werkstückoberfläche tritt, wobei ein Teil des Materials des mindestens einen Werkstücks plastifiziert wird;
- Während mindestens einer Schweißoperation und/oder nach einer Schweißoperation:
Betätigung der Druckquelle des FSW-Werkzeugs (10), um innerhalb des FSW-Werkzeugs (10) einen Druck zu erzeugen und eine Förderkraft auf ein plastifiziertes Material auszuwirken, das sich etwaig im Ringspalt (21) befindet.

## Claims

1. A set of fittings for an FSW tool (10), comprising an adapter (12) insertable in a tool receiving element (15), which is designed to accommodate a welding rod (11), and a shoulder cap (13) having a through-opening (20) for the welding rod (11) and the adapter (12), wherein the shoulder cap (13) includes a welding shoulder region (21) adjacent to the through-opening (20), and wherein the adapter (12) is rotatable relative to the shoulder cap about a longitudinal axis (A) extending concentrically to the through-opening (20), **characterized in that** the inner contour (20a) of the through-opening (20), as well as a radial contour (12a) of the adapter (12) are conically shaped at least at the end facing the welding point.

2. The set of fittings according to Claim 1, wherein the adapter (12) and the tool receiving element (15) are designed in such a way that a positioning of the adapter is infinitely adjustable in the direction of the longitudinal axis (A) relative to the welding shoulder region (13a).

3. The set of fittings according to Claim 1 or 2, wherein the adapter (12) is designed in such a way that a positioning of the welding rod (11) is infinitely adjustable along the longitudinal axis (A).

4. The set of fittings according to one of the preceding claims, wherein an annular gap (21) is formed between the shoulder cap (13) and the adapter (12) at least in the region of the through-opening (21), wherein a (first) guide structure (22) is situated on the conical radial outer contour (12a) of the adapter (12) and/or on the inner contour (20a) of the through-opening (20), which generates a conveying force in the direction of the longitudinal axis (A) on a material located in the annular gap (21) during a relative rotation between the adapter (12) and the shoulder cap (13).

5. The set of fittings according to Claim 4, wherein a second (inner) guide structure (23) is also situated on the conical radial outer contour (12a) of the adapter (12) and/or on the inner contour (20a) of the through-opening (20), which is located closer to the inside of the FSW tool in the longitudinal direction (A), and wherein the first (outer) guide structure (22) generates a conveying force in the direction of the outside of the FSW tool and the second (inner) guide structure (23) generates a conveying force in the direction of the inside of the FSW tool.

6. The set of fittings according to one of the preceding claims, wherein a chamber (30) is situated in the assembled state of the set of fittings at the inner end of the annular gap (21), which serves to receive welding material passing through the annular gap (21).

7. The set of fittings according to one of the preceding claims, wherein one or multiple adjustment means for setting the axial position (XA, XP) of the adapter (12) and/or of the welding rod (11), in particular, in the form of adjustable stops, or clamp screws, are situated on the tool receiving clamp devices element (15) and/or on the adapter (12).

8. A FSW tool comprising a set of fittings (18) according to Claim 1, a dome (16), which encompasses the tool receiving device (15), and a tool carrier (17), on which the tool receiving element (15) and/or the dome (16) are supported, **characterized in that** the tool receiving element (15) is rotatably mounted relative to the dome (16) and is supported on the tool carrier (17) in the direction of the longitudinal axis (A), and that the shoulder cap (13) is non-rotatably connected to the tool carrier and is supported in the direction of the longitudinal axis (A).

9. The FSW tool according to the preceding claim, wherein the tool receiving device (17) is designed to be fastened to a manipulator, in particular, to a multiaxial industrial robot.

10. The FSW tool according to one of the preceding claims, wherein the shoulder cap (13) is connected to the dome (16) by a separate fastening means, in particular, by a cap nut (14), and wherein the dome (16) includes one or multiple openings (24) situated transversely to the longitudinal axis (A), through which one or multiple adjustment means for setting the axial position of the adapter (12) and/or of the welding rod (11) are accessible.

11. The FSW tool according to one of the preceding claims, wherein the shoulder cap (13) and the dome (16) encase the tool receiving element (15) in a pressure-tight manner, and wherein the FSW tool (10) includes a pressure source, so that when a pressure is generated within the FSW tool (10) on a material located in the annular gap (21), the material is impacted by an outwardly directed or inwardly directed conveying force.

12. A method for adapting a set of fittings (18) or an FSW tool (10) according to one of the preceding claims for a welding operation, **characterized by** the following step:
- setting the position (XA) of the adapter (12) in the longitudinal direction (A) relative to the position of the shoulder cap (13) in such a way that the internal width (D) of the annular gap (21) is set to a desired degree.

13. The method according to the preceding claim, further comprising the steps:
- shortening (12c) at least the adapter (12) in the region of the end face (12b) or at least of the shoulder cap (13) in the area of the welding shoulder region (13a), in order to adjust a difference in vertical position between the end face (12b) and the welding shoulder region (13a) to a desired degree, in particular, for reducing or eliminating such a difference in vertical position.

14. The method according to one of the preceding claims, wherein the end face of the adapter (12), together with a welding shoulder region (13a), is shorted in the direction of the longitudinal axis (A),
- so that a uniform height of the welding shoulder region (13a) and of the end face (12b) of the adapter (12) is produced in the direction of the longitudinal axis (A), and/or
- so that surface dimensions of the welding shoulder region (13a) and/or of the end face (12b) are adjusted to a desired degree.

15. An operating method for an FSW tool according to Claim 11, for carrying out at least one welding operation, comprising the following steps:
- positioning the FSW tool (10) on at least one workpiece, so that the welding rod (11) contacts the workpiece surface;
- executing a dipping movement along the longitudinal axis (A) of the welding rod (11), until an auxiliary shoulder (12b) on the adapter (12) and/or a welding shoulder region (13a) of the shoulder cap (13) contacts the workpiece surface, wherein a portion of the material of the at least one workpiece is plasticized;
- during (at least) one welding operation and/or after a welding operation: actuating the pressure source of the FSW tool (10) in order to generate a pressure within the FSW tool (10) and to impact a plasticized material possibly located in the annular gap (21) with a conveying force.

## Revendications

1. Kit pour un outil FSW (soudage friction-malaxage) (10) comprenant un adaptateur (12) pouvant être inséré dans un porte-outil (15) et conçu pour recevoir une broche de soudage (11), et un capuchon à épaulement (13) avec une ouverture de passage (20) pour la broche de soudage (11) et l'adaptateur (12), le capuchon à épaulement (13) présentant une zone d'épaulement de soudage (21) se raccordant à l'ouverture de passage (20) sur la surface extérieure, et dans lequel l'adaptateur (12) peut tourner par rapport à la calotte d'épaule autour d'un axe longitudinal (A) s'étendant concentriquement à l'ouverture de passage (20), **caractérisé en ce que** le contour intérieur (20a) de l'ouverture de passage (20) et un contour extérieur radial (12a) de l'adaptateur (12) sont de forme conique au moins à l'extrémité tournée vers le point de soudure.

2. Kit selon la revendication 1, dans lequel l'adaptateur (12) et le porte-outil (15) sont conçus de telle manière qu'un positionnement de l'adaptateur dans la direction de l'axe longitudinal (A) par rapport à la zone d'épaulement de soudage (13a) est réglable en continu.

3. Kit selon la revendication 1 ou 2, dans lequel l'adaptateur (12) est conçu de telle manière qu'un positionnement de la broche de soudage (11) le long de l'axe longitudinal (A) est réglable en continu.

4. Kit selon l'une des revendications précédentes, dans lequel un espace annulaire (21) est formé entre le capuchon d'épaulement (13) et l'adaptateur (12) au moins dans la région de l'ouverture de passage (21), dans lequel une (première) structure de guidage (22) est disposée sur le contour extérieur radial conique (12a) de l'adaptateur (12) et/ou sur le contour intérieur (20a) de l'ouverture de passage (20), qui, lors de la rotation relative entre l'adaptateur (12) et le chapeau d'épaulement (13), produit une force de transport dans la direction de l'axe longitudinal (A) sur un matériau se trouvant dans l'interstice annulaire (21).

5. Kit selon la revendication 4, dans lequel une deuxième structure de guidage (intérieure) (23) est en outre disposée sur le contour extérieur radial conique (12a) de l'adaptateur (12) et/ou sur le contour intérieur (20a) de l'ouverture de passage (20), laquelle deuxième structure de guidage (intérieure) (23) est située plus près de l'intérieur de l'outil FSW dans la direction longitudinale (A), et dans lequel la première structure de guidage (extérieure) (22) provoque une force de transport en direction de l'extérieur de l'outil de soudage par compression et la seconde structure de guidage (intérieure) (23) provoque une force de transport en direction de l'intérieur de l'outil de soudage par compression.

6. Kit selon l'une des revendications précédentes, dans lequel, à l'état monté de l'ensemble de montage, une chambre (30) est disposée à l'extrémité intérieure de l'interstice annulaire (21), laquelle chambre sert à recevoir le matériau de soudage passant à travers l'interstice annulaire (21).

7. Kit selon l'une des revendications précédentes, dans lequel un ou plusieurs moyens de réglage pour fixer la position axiale (XA, XP) de l'adaptateur (12) et/ou du goujon soudé (11) sont disposés sur le porte-outil (15) et/ou sur l'adaptateur (12), en particulier sous la forme de butées réglables, de dispositifs de serrage ou de vis de serrage.

8. Outil FSW (soudage friction-malaxage) comprenant un kit de montage (18) selon la revendication 1, un dôme (16) qui entoure le porte-outil (15) et un support d'outil (17) sur lequel le porte-outil (15) et/ou le dôme (16) sont montés, **caractérisé en ce que** le porte-outil (15) est monté à rotation par rapport au dôme (16) et est supporté sur le support d'outil (17) dans la direction de l'axe longitudinal (A), et **en ce que** le capuchon d'épaulement (13) est relié au support d'outil (17) de manière solidaire en rotation et est supporté dans la direction de l'axe longitudinal.

9. Outil FSW selon la revendication précédente, dans lequel le porte-outil (17) est adapté pour être fixé à un manipulateur, en particulier à un robot industriel multi-axes.

10. Outil FSW selon l'une des revendications précédentes, dans lequel le capuchon d'épaulement (13) est relié au dôme (16) par un moyen de fixation séparé, en particulier par un écrou-raccord (14), et dans lequel le dôme (16) présente une ou plusieurs ouvertures (24) disposées transversalement à l'axe longitudinal (A), par lesquelles un ou plusieurs moyens de réglage pour fixer la position axiale de l'adaptateur (12) et/ou du goujon soudé (11) sont accessibles.

11. Outil FSW selon l'une des revendications précédentes, dans lequel l'épaulement (13) et le dôme (16) entourent le logement d'outil (15) de manière étanche à la pression, et dans lequel l'outil FSW (10) comporte une source de pression de sorte que lorsqu'une pression est générée à l'intérieur de l'outil FSW (10), une force de transport dirigée vers l'extérieur ou vers l'intérieur est exercée sur un matériau situé dans l'espace annulaire (21) .

12. Procédé d'adaptation d'un kit (18) ou d'un outil FSW (10) selon l'une des exigences précédentes pour une opération de soudage, **caractérisé par** l'étape suivante:
- déterminer la position (XA) de l'adaptateur (12) dans le sens longitudinal (A) par rapport à la position de la calotte d'épaule (13) de telle sorte que la largeur (D) de l'espace annulaire (21) soit réglée à une dimension souhaitée.

13. Procédé selon la revendication précédente, comprenant en outre les étapes:
- Raccourcir (12c) au moins l'adaptateur (12) dans la zone de la face avant (12b) ou au moins l'épaulement (13) dans la zone de l'épaulement de soudage (13a) afin d'ajuster une différence de hauteur entre la face avant (12b) et l'épaulement de soudage (13a) à une dimension souhaitée, en particulier pour réduire ou éliminer une telle différence de hauteur.

14. Procédé selon l'une des revendications précédentes, dans lequel la face frontale de l'adaptateur (12) est raccourcie dans la direction de l'axe longitudinal (A) avec une zone d'épaulement de soudage (13a),
- de sorte qu'une hauteur uniforme de la zone d'épaulement de soudage (13a) et de la face frontale (12b) de l'adaptateur (12) soit produite dans la direction de l'axe longitudinal (A), et/ou
- afin que les dimensions de la surface de l'épaulement de soudage (13a) et/ou de la face frontale (12b) soient ajustées à une dimension souhaitée.

15. Procédé de fonctionnement d'un outil FSW selon la revendication 11, pour effectuer au moins une opération de soudage comprenant les étapes suivantes:
- Avance de l'outil FSW (10) sur au moins une pièce de manière à ce que la goupille de soudage (11) entre en contact avec la surface d'une pièce;
- Exécution d'un mouvement d'immersion le long de l'axe longitudinal (A) du goujon de soudage (11) jusqu'à ce qu'un épaulement auxiliaire (12b) sur l'adaptateur (12) et/ou une partie d'épaulement de soudage (13a) du capuchon d'épaulement (13) entre en contact avec la surface de la pièce, une partie du matériau d'au moins une pièce étant ainsi plastifiée;
- Pendant au moins une opération de soudage et/ou après une opération de soudage:
actionnement de la source de pression de l'outil FSW (10) afin de générer une pression dans l'outil FSW (10) et d'exercer une force de transport sur un matériau plastifié éventuellement situé dans l'espace annulaire (21).
